Europäisches Patentamt

(19) European Patent Office

Office européen des brevets

(11) Publication number: **0 025 032**
**B1**

(12) **EUROPEAN PATENT SPECIFICATION**

(45) Date of publication of patent specification: **27.07.83**     (51) Int. Cl.³: **A 01 G 23/08, F 16 H 51/00**

(21) Application number: **79901121.8**

(22) Date of filing: **05.03.79**

(86) International application number:
**PCT/US79/00131**

(87) International publication number:
**WO 80/01865 18.09.80 Gazette 80/21**

(54) TREE ACCUMULATING APPARATUS.

| | |
|---|---|
| (43) Date of publication of application:<br>**18.03.81 Bulletin 81/11** | (73) Proprietor: **CATERPILLAR TRACTOR CO.**<br>**100 Northeast Adams Street**<br>**Peoria Illinois 61629 (US)** |
| (45) Publication of the grant of the patent:<br>**27.07.83 Bulletin 83/30** | (72) Inventor: **DAUWALDER, Fred R.**<br>**10 Timbercreek Ct. R. R. 1**<br>**Yorkville, IL 60560 (US)** |
| (84) Designated Contracting States:<br>**CH DE FR GB SE** | (74) Representative: **Jackson, Peter Arthur et al,**<br>**GILL JENNINGS & EVERY 53-64 Chancery Lane**<br>**London WC2A 1HN (GB)** |
| (56) References cited:<br>**US - A - 3 468 352**<br>**US - A - 3 664 391**<br>**US - A - 3 795 264**<br>**US - A - 3 805 860**<br>**US - A - 3 875 983**<br>**US - A - 3 886 985**<br>**US - A - 3 910 326**<br>**US - A - 3 911 981**<br>**US - E - 29 235** | |

## Tree accumulating apparatus

This invention relates to tree harvesting machines equipped with an apparatus for accumulating the trees one at a time and, more particularly, to accumulators having only one movable arm for accumulating trees one at a time.

In recent years, the cost of harvesting trees has increased thereby compelling a search for more economical harvesting methods and apparatus. In the pioneer days, trees were manually harvested one at a time with an axe or saw. This method was satisfactory for pioneer days but as the demand for lumber grew, more productive methods were discovered. Today, there is a variety of logging equipment including tree fellers, debarkers and delimbers which greatly increase productivity. It is desirable to further increase productivity.

To increase productivity tree fellers have been constructed which sever several small trees at one time. While this has the advantage of saving time, it is useful only with small trees which grow very close together.

Normally, larger trees are cut one at a time and individually moved or stacked so that the tree harvester can proceed to the next tree. A certain amount of time is involved in moving or stacking cut trees and during this time the tree harvester is not cutting other trees and is therefore unproductive. Recent tree harvesters have been equipped with accumulators which accumulate cut trees one at a time and hold the trees until it is filled to its capacity of several trees. The trees are then stacked or gang loaded for transport in about the same time it takes to stack or load a single tree. While this is an improvement, there is still a need to be more economical. Apparently, the machines are operated at full human capacity; so, any improvements must relate to the machines themselves.

The state of the art of accumulators for tree harvesters is exemplified by the following U.S. Patents:

| Patent no. | Publication date | Inventor |
|---|---|---|
| 3,664,391 | May 23, 1972 | H. D. Coffey |
| 3,805,860 | April 23, 1974 | L. N. Smith |
| 3,875,983 | April 8, 1975 | J. Kurelek |
| RE 29,235 | May 31, 1977 | J. Kurelek |
| 3,886,985 | June 3, 1975 | A. Larocci et al |
| 3,910,326 | Oct. 7, 1975 | F. Tucek |
| 3,911,981 | Oct. 14, 1975 | F. Tucek |

U.S. Patent Nos. 3,875,983, RE 29,235, and 3,886,985 are similar in construction and operation and each utilize two pairs of movable arms cooperating with one another to gather a plurality of trees one at a time. Each arm of each pair of arms is pivotally movable requiring complicated, and therefore expensive, parts and connections to achieve the movement. Similarly, U.S. Patent No. 3,664,391 uses two pairs of complicated arms with each arm of each pair of arms being pivotally movable. It is therefore desirable to have pairs of arms in which each arm is more simply constructed.

U.S. Patent No. 3,805,860 uses a single arm for holding the severed trees instead of a pair of arms. Unfortunately, two hydraulic cylinders are required to manipulate the tree accumulating arm so as to remove it from between the accumulated trees and a tree to be accumulated. Obviously, two cylinders double the chances for breakdown or failure and add to the cost and complexity of the accumulator arm as compared with using a single cylinder.

U.S. Patent Specification No. 3,911,981 discloses the use of a single, movable arm for accumulating trees; however, the arm comprises a compound linkage arrangement which, while reducing the number of extra cylinders to zero, is nevertheless a complicated structure. U.S. Patent Specification No. 3,910,326 has a simpler structure than U.S. Patent Specification No. 3,911,981. They both have chains, however, which can slip off their sprockets in a logging environment. It is therefore desirable to have a simple accumulator mechanism which can hold and accumulate harvested trees and perform in a logging environment.

In accordance with the present invention, a tree accumulating apparatus for a multiple tree harvester, for accumulating trees one at a time comprises a frame; a second elongate member pivotally connected to the frame; a third elongate member having a first end portion pivotally connected to an end portion of the second member; biasing means for urging the third member towards an open position; a first elongate member having a first end portion pivotally connected to the frame, an intermediate portion of the second member being pivotally connected to a second end portion of the first member whereby the second member is pivotally connected to the frame, the second member being movable relatively to the first member between an open position and a closed position; means for holding the second member in one of the open and closed positions; and means for pivotally moving the second member about the second end portion of the first member.

An example of a multiple tree harvester incorporating an accumulating apparatus in accordance with the present invention is illustrated in the accompanying drawings, in which:—

Figure 1 is a diagrammatic side view;

Fig. 2 is a view taken on the line 2—2 in Figure 1 illustrating the accumulating apparatus in greater, somewhat enlarged detail;

Fig. 3 is a diagrammatic view similar to Fig. 2 showing the accumulating arm of the accumulating apparatus;

Fig. 4 is a diagrammatic view of the accumulating arm shown in a fully open position;

Fig. 5 is a diagrammatic view of the accumulating arm shown in a partially open position;

Fig. 6 is a diagrammatic view of the accumulating arm shown in a fully closed position; and

Fig. 7 is a diagrammatic view of the accumulating arm shown in a partially closed position.

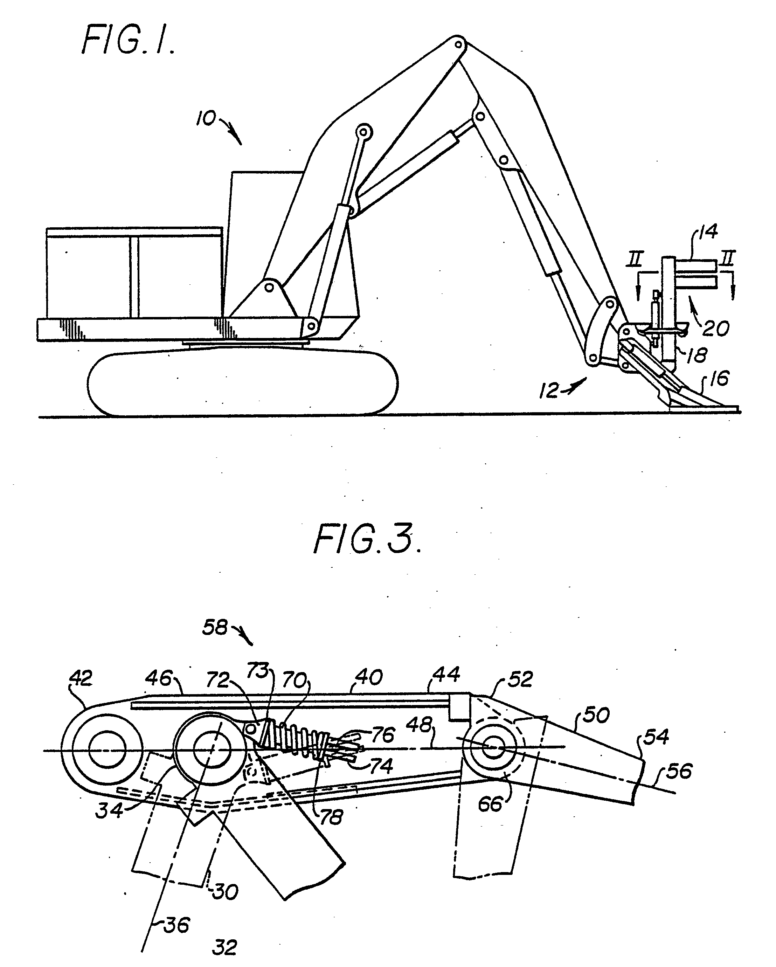

Referring to Fig. 1, a vehicle, such as an excavator 10, is equipped with a tree harvester attachment 12 connected to the stick and boom of the excavator 10. The tree harvester 12 is movable, vertically and laterally, as a regular excavator bucket would be movable. The tree harvester 12 has a pair of grapple arms 14 and a pair of shears 16 mounted on an upright frame 18. The shears 16 are positioned below the grapple arms 14 and are both controlled by fluid cylinders (not shown) as is known in the prior art.

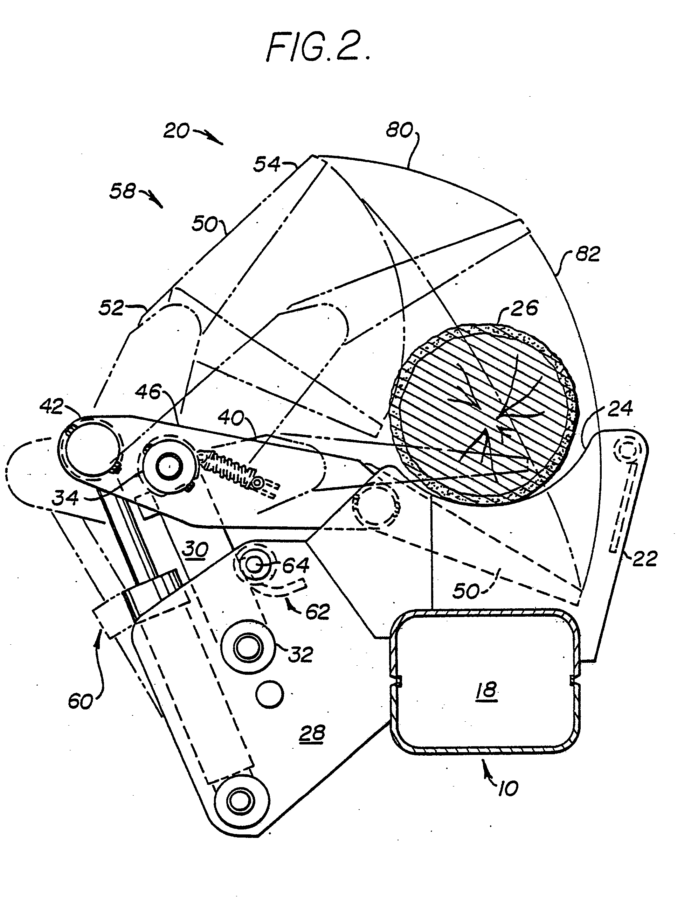

Referring to Figs. 1 and 2, a tree accumulating apparatus 20 is attached to the frame 18 and positioned intermediate the grapple 14 and shears 16. The tree accumulating apparatus 20 includes a support member 22 which is connected to the frame 18 and which has a curved edge portion 24 for receiving one or more trees 26. There are preferably two support members 22 connected to the frame 18 and vertically spaced a preselected distance one from the other.

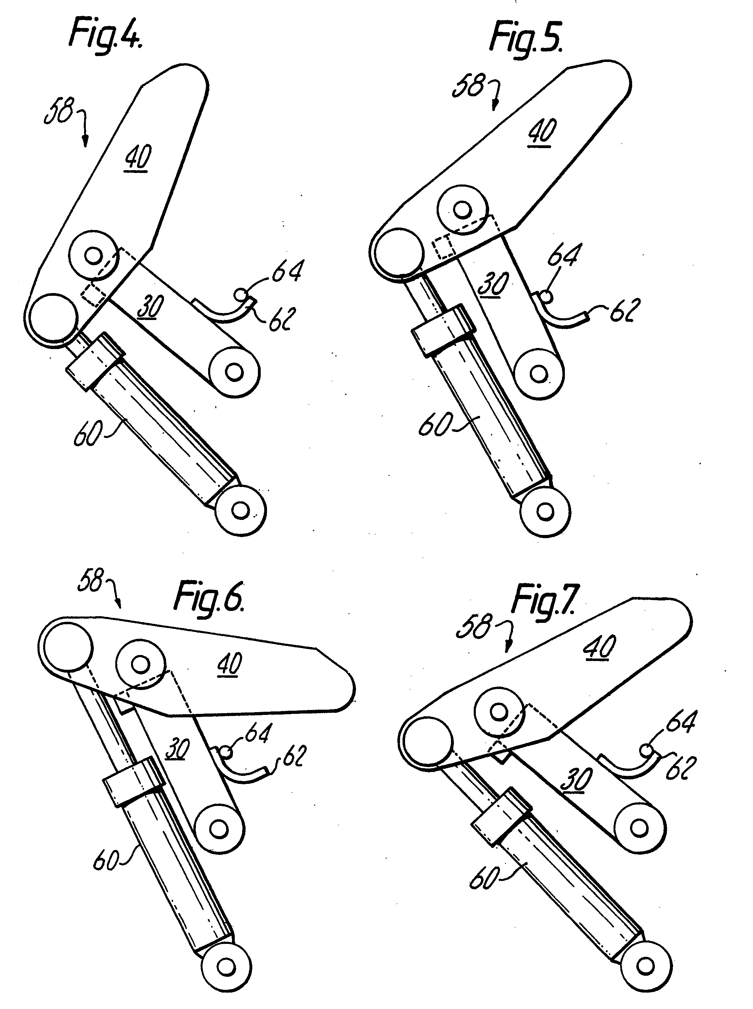

Referring to Figs. 2 and 3, the tree accumulating apparatus 20 also includes a mounting bracket 28 which is connected to the frame 18. A first member 30 has a first end portion 32 pivotally connected to the bracket 28, a second end portion 34, and a longitudinal axis 36. A second member 40 has first and second end portions 42, 44, a middle portion 46, and a longitudinal axis 48. The middle portion 46 is pivotally connected to the second end portion 34 of the first member 30. A third member 50 has a first end portion 52 pivotally connected to the second end portion 44 of the second member 40, a second, free end portion 54, and a longitudinal axis 56. The three members 30, 40 and 50 comprise an accumulating arm 58.

Referring to Fig. 2, means, such as fluid cylinder 60, are provided for pivotally moving the second member 40 about the second end portion 34 of the first member 30. The cylinder 60 has its head end pivotally connected to the bracket 28 and its rod end pivotally connected to the first end portion 42 of the second member 40. The manner in which the cylinder 60, first member 30 and second member 40 are interconnected facilitates movement of both members 30, 40, as will be more fully explained below.

Means, such as hook 62 and pin 64, are provided for limiting the pivotal movement of the first member 30 relative to the bracket 28 to a value within a range of about 0 to 25 degrees. The hook 62 is preferably connected to the first member 30 and the pin 64 preferably protrudes vertically from the bracket 28. As an alternative to the hook 62, a slotted link can be used. The slotted link can have a simple slot and be pivotally connected to one of the first member 30 and bracket 28 or can be non-pivotally attached and have a triangular slot.

Referring to Fig. 3, the third member 50 is movable relative to the second member 40 between a first, open position at which the axes 48, 56 of the second and third members 40, 50 are generally aligned and a second, closed position at which the second, free end 54 of the third member 50 is displaced toward the second member 40. At the second position the axes 48, 56 form a preselected angle.

Biasing means, such as a roll spring 66, urges the third member 50 towards the first position.

The second member 40 is movable relative to the first member 30 between an open position and a closed position. Means, such as over-centre spring 70, is provided for holding the second member 40 in one of the open and closed positions. The over-centre spring 70 is preferably a coil spring which has one end connected to the first member 30 and the other end connected to the second member 40.

The coil spring 70 is preferably positioned about a bracket 72 which has a cap portion 73 connected to the first member 30 and a slotted end portion 74. The end portion 74 fits on a pin 76 and is slidably movable on the pin 76. A washer 78 and the cap 73 keep the spring 70 on the spring bracket 72 in a compressed state.

The pin 76 is positioned at a location on the middle portion 46 of the second member 40 and is on the axis 48. When the second member 40 is in its open position the cap portion 73 and the spring 70 are on one side of the axis 48 and when the second member 40 is in its closed position the cap 73 and spring 70 are on the other side of the axis 48.

Referring to Figs. 4—7, the accumulating arm 58 is shown as it moves from a fully open position (Fig. 4) to a fully closed position (Fig. 6). At the fully open position, the first and second members 30, 40 are each in their open position, the cylinder 60 is fully retracted, and the free end of the hook 62, the end nearest the frame 18, is contacting the pin 64. At the fully closed position, the first and second members 30, 40 are each in their closed positions, the cylinder 60 is fully extended, and the fixed end of the hook 62, the end of the hook 62 fixed to the first member 30, is contacting the pin 64.

At the partially open position shown in Fig. 5, the first member 30 is in its closed position, the second member 40 is in its open position, and the cylinder is partially retracted or extended as would be the case when the arm 58 is moving from its fully open position (Fig. 4) to its fully closed position (Fig. 6). The fixed end of the hook 62 is contacting the pin 64. This is the position assumed by the arm 58 immediately before the second member 40 closes upon the application of sufficient force by the cylinder 60.

At the partially closed position shown in Fig. 7, the first member 30 is in its open position, the second member 40 is in its closed position, and the cylinder is partially extended or retracted as would be the case when the arm 58 is moving from its fully closed position (Fig. 6) to its fully open position (Fig. 4). The free end of the hook 62 is contacting the pin 64. This is the position assumed by the arm 58 immediately before the second member 40 opens upon the application of sufficient force by the cylinder 60.

As the accumulating arm 58 is closed from its fully open position (Fig. 4) by the extension of the cylinder 60 from its fully retracted position, the over-centre spring 70 holds the second member 40 in its open position with respect to the first member 30 until the fixed end of the hook 62 contacts the pin 64 preventing further rotation of the first member 30 with respect to the frame 18. This resulting position is depicted by Fig. 5.

Further extension of cylinder 60 past the position shown in Fig. 5 requires the cylinder force to overcome the holding force of the over-center spring 70 to move the second member 40 with respect to the stationary member 30. This motion continues as the cylinder 60 extends until a tree 26 is clamped against support member 22 or until cylinder 60 is fully extended if no tree is being clamped. This occurs at the end of each cycle when both the accumulator arm 58 and the grapple 14 are opened simultaneously to release the load of trees and the accumulator arm 58 is then allowed to close to its normally closed position (Fig. 6). In its normally closed position (see Figs. 6 and 2) the accumulator arm 58 lies entirely behind the cradle created by the curved edge of support member 22 and therefore does not interfere with one-at-a-time harvesting of large trees. For large trees the accumulator arm 58 can remain in its relatively protected normally closed position.

The closing path fo the accumulating arm 58 has two distinct segments as indicated by dashed lines 80 and 82 (Fig. 2). The first distinct segment 80 results from the movement of the accumulating arm 58 from the position shown in Fig. 4 to the position shown in Fig. 5 where the tip 54 of the arm 58 rotates about the first end 32 of the first member 30. After the fixed end of the hook 62 contacts the pin 64 (Fig. 5), the tip 54 of the arm 58 rotates about the second end 34 of the first member 30 which results in essentially rearward motion and therefore rearward clamping effort of arm 58. Rearward clamping effort is required to clamp the tree 26 against the support member 22.

As the arm 58 is opened from its fully closed position (Fig. 6) or another tree holding position by the retraction of the cylinder 60, the over-center spring 70 holds the second member 40 in its closed position with respect to the first member 30 until the free end of hook 62 contacts the pin 64 preventing further rotation of the first member 30 with respect to the frame 18. This resulting position is depicted by Fig. 7.

Further retraction of cylinder 60 requires the cylinder force to overcome the holding force of the over-centre spring 70 to move the second member 40 with respect to the stationary member 30. This motion continues as the cylinder 60 retracts fully to the position shown in Fig. 4.

Like the closing path, the opening path of arm 58 has two distinct segments, the first in an essentially lateral movement of the arm 58 due to rotation of the members 30, 40, 50, about the end 32 of member 30 until the free end of the hook 62 contacts the pin 64. The primarily lateral movement of the arm 58 and freedom of member 50 to pivot toward the frame 18 easily enables the arm 58 to be pulled free from behind the severed tree or from between two severed trees. In the second part of the motion the arm 58 pivots about the end 34 of stationary arm 30 until the cylinder 60 is fully retracted and the arm 58 is in the fully open position (Fig. 4).

In operation, the excavator 10 is driven close to the trees to be harvested and stopped. The stick and boom of the excavator 10 are extended to move the tree harvester attachment 12 from tree to tree during operation of the tree accumulating apparatus 20. The accumulated trees can be conveniently moved and stacked by manipulating the stick and boom or by propelling the excavator 10.

Referring to Fig. 2, the accumulating arm 58 is closed or retracted so that the third member 50 is displaced toward the frame 18 and lies between the two vertically spaced support members 22. In this retracted position, the accumulating arm 58 is close to the frame 18 and the risk of becoming entangled with tree branches or other trees is minimized.

With the shears 16 and grapple 14 in their open positions, the tree harvester 12 is moved to the tree 26. The grapple arms 14 are closed around the tree 26 and the tree 26 is positioned against the curved edge 24 of the support member 22. The shears 16 are closed about the tree 26 to sever it from its base. At this time, the grapple arms 14 hold the tree 26 against the support member 22 while the shears 16 provide vertical support.

At this time, the arm 58 is still retracted with the first member 30 in its first, closed position, the second member 40 in its first, closed position, and the third member 50 in its first, open position. While the shears 16 and grapple 14 secure the cut tree 26, the arm 58 is opened and then closed to accumulate and hold the tree 26.

To open the arm 58, the cylinder 60 is retracted causing the first member 30 to pivot from its first, closed position to its second, open position. The pivotal movement of the first member is stopped by the limiting means 62 when the end of the hook 62 nearest the frame 18 contacts the pin 64.

As the first member 30 pivots, the third member 50 pivots from its first, open position to its second, closed position so that it is withdrawn from between the tree 26 and frame 18. When the third member 50 is clear of the tree 26, the biasing spring 66 urges the third member 50 toward its first, open position. Depending on the diameter of the tree 26, the third member 50 may not be returned to its open position merely in response to the first member 30 moving to its open position. For example, with a small tree the third member 50 may return to its open position, while it may not return with a somewhat larger tree.

To insure that the third member 50 does return to its open position, the second member 40 moves from its first, closed position to its second, open position thereby withdrawing the free end 54 of the third member 50 from the tree 26. Because of the over-center spring 70, the second member 40 cannot move from its closed position to its open position until the first member 30 moves to its open position wherein the end of the hook 62 nearest the frame 18 abuts the pin 64. By having the second member 40 remain closed, the third member 50 is first moved laterally, then pivotally which allows it to slip from between the tree 26 and support 22 without expending effort to move the tree 26.

When the first member 30 moves to its open position, the second member 40 moves from its closed position to its open position upon the urging of the retracting cylinder 60 which pivots the second member 40 about the second end 34 of the first member 30. Thus, the cylinder 60 actually moves both members 30, 40. This pivotal movement of the second member 40 causes the third member 50 to pivot if the free end 54 of the third member 50 has not cleared the tree 26.

When the second member 40 is in the closed position, the forced exerted by the cylinder 60 tending to pivot the second member 40 about the first member 30 must overcome the force of the spring 70 which tends to keep the members 30, 40 in the closed position. When the force is overcome, the second member 40 moves toward its open position.

When the arm 58 has cleared the tree 26, the cylinder 60 is extended to close the arm 58 around the tree 26 with the third member 50 positioned on one side of the tree 26 and the curved edge 24 of the support member 22 on the other side of the tree 26. The arm 58 securely holds the tree 26 when the shears 16 are opened and their vertical support is removed. The grapple arms 14 are opened to receive a succeeding tree against the third member 50 and first tree 26. The grapples 14 are then closed to hold the succeeding tree which is then severed by the shears 16. The arm 58 is withdrawn as previously described and then closed to securely hold and accumulate both the original tree 26 and the succeeding tree. This process is repeated until the capacity of the tree accumulating apparatus 20 is reached.

## Claims

1. A tree accumulating apparatus (20) for a multiple tree harvester (12), for accumulating trees (26) one at a time, the apparatus (20) comprising a frame (18); a second elongate member (40) pivotally connected to the frame (18); a third elongate member (50) having a first end portion (52) pivotally connected to an end portion (44) of the second member (40); and biasing means (66) for urging the third member (50) towards an open position, characterised in that the apparatus further comprises a first elongate member (30) having a first end portion (32) pivotally connected to the frame (18), an intermediate portion (46) of the second member (40) being pivotally connected to a second end portion (34) of the first member (30) whereby the second member (40) is pivotally connected to the frame (18), the second member (40) being movable relatively to the first member (30) between an open position and a closed position; means (70) for holding the second member (40) in one of the open and closed positions; and means (60) for pivotally moving the second member (40) about the second end portion (34) of the first member (30).

2. Apparatus (20) according to claim 1, characterised in that the holding means (70) includes a coil spring (70) connected at one end to the first member (30) and connected at the other end to the second member (40).

3. Apparatus (20) according to claim 1 or claim 2, characterised in that the moving means (60) includes a fluid cylinder (60) pivotally connected to the frame (18) and the second member (40).

4. Apparatus (20) according to any of the preceding claims, characterised in that means (62) are provided for limiting pivotal movement of the first member (30).

5. Apparatus (20) according to claim 4, characterised in that the limiting means (62) includes a pin (64) connected to one of the frame (18) and the first member (30); and a hook (62) connected to the other of the frame (18) and the first member (30).

6. Apparatus (20) according to claim 4 or claim 5, characterised in that the limiting means (62) limits the pivotal movement of the first member (30) relatively to the frame (18) to a value within a range of substantially 0 to 25 degrees.

7. A multiple tree harvester (12) having an apparatus (20) according to any of the preceding claims, wherein the frame (18) is substantially vertical, the first member (30) is movable between a first position at which the first member (30) is displaced from the frame (18) and a second position at which the first member (30) is displaced toward the frame (18), the second member (40) is movable between its closed position at which the end portion (44) of the second member (40) connected to the third member (50) is displaced towards the first member (30) and its open position at which the end portion (44) of the second member (40) is displaced from the first member (30), and the third member (50) is displaced, in use, towards the frame (18) in response to the first member (30) being at the second position and the second member (40) being in the closed position, the longitudinal axes (48, 56) of the second and third members (40, 50) forming a substantially straight line at the open position of the third member (50) in which it is displaced towards the frame (18).

**Patentansprüche**

1. Baumsammelvorrichtung (20) für eine Mehrfachbaumerntemaschine (12) zum Sammeln von Bäumen (26) jeweils einen zu einem Zeitpunkt, wobei die Vorrichtung (20) folgendes aufweist: einen Rahmen (18), ein zweites langgestrecktes Glied (40) schwenkbar verbunden mit dem Rahmen (18), ein drittes langgestrecktes Glied (50) mit einem ersten Endteil (52) schwenkbar verbunden mit einem Endteil (44) des zweiten Glieds (40), und Vorspannmittel (66), um das dritte Glied (50) in eine offene Position zu drücken, wobei die Vorrichtung dadurch gekennzeichnet ist, daß sie ferner folgendes aufweist: ein erstes langgestrecktes Glied (30) mit einem ersten Endteil (32) schwenkbar verbunden mit dem Rahmen (18), ein Zwischenteil (46) des zweiten Glieds (40) schwenkbar verbunden mit einem zweiten Endteil (34) des ersten Glieds (30), wodurch das zweite Glied (40) schwenkbar mit dem Rahmen (18) verbunden ist, und wobei das zweite Glied (40) bezüglich des ersten Glieds (30) zwischen einer offenen Position und einer geschlossenen Position bewegbar ist, Mittel (70) zum Halten des zweiten Glieds (40) in entweder der offenen oder der geschlossenen Position, und Mittel (60) zur Schwenkbewegung des zweiten Glieds (40) um das zweite Endteil (34) des ersten Glieds (30).

2. Vorrichtung (20) nach Anspruch 1, dadurch gekennzeichnet, daß die Haltemittel (70) eine Schraubenfeder (70) aufweisen, die an einem Ende mit dem ersten Glied (30) und am anderen Ende mit dem zweiten Glied (40) verbunden ist.

3. Vorrichtung (20) nach Anspruch 1 oder 2, dadurch gekennzeichnet, daß die beweglichen Mittel (60) einen Strömungsmittelzylinder (60) aufweisen, der schwenkbar mit dem Rahmen (18) und dem zweiten Glied (40) verbunden ist.

4. Vorrichtung (20) nach einem der vorhergehenden Ansprüche, dadurch gekennzeichnet, daß Mittel (62) zur Begrenzung der Schwenkbewegung des ersten Glieds (30) vorgesehen sind.

5. Vorrichtung (20) nach Anspruch 4, dadurchgekennzeichnet, daß die Begrenzungsmittel (62) einen Stift (64) verbunden mit dem Rahmen (18) oder dem ersten Glied (30) aufweisen, und daß ein Haken (62) mit dem Rahmen (18) oder dem ersten Glied (30) verbunden ist.

6. Vorrichtung (20) nach Anspruch 4 oder 5, dadurch gekennzeichnet, daß die Begrenzungsmittel (62) die Schwenkbewegung des ersten Glieds (30) bezüglich des Rahmens (18) auf einen Wert beschränken, der innerhalb eines Bereichs von im wesentlichen 0 bis 25 Grad liegt.

7. Mehrfachbaumerntemaschine (12) mit einer Vorrichtung (20) gemäß einem der vorhergehenden Ansprüche, wobei der Rahmen (18) im wesentlichen vertikal angeordnet ist, das erste Glied (30) zwischen einer ersten Position und einer zweiten Position bewegbar ist, wobei in der ersten Position das erste Glied (30) gegenüber dem Rahmen (18) versetzt ist, während in der zweiten Position das erste Glied (30) zum Rahmen (18) hin versetzt ist, und wobei das zweite Glied (40) zwischen seiner geschlossenen Position under seiner offenen Position bewegbar ist, wobei in der geschlossenen Position das Endteil (44) des zweiten Glieds (40) verbunden mit dem dritten Glied (50) zum ersten Glied (30) hin versetzt ist, während in der offenen Position das Endteil (44) des zweiten Glieds (40) vom ersten Glied (30) weg versetzt ist, und wobei schließlich das dritte Glied (50) im Gebrauch zum Rahmen (18) hin versetzt ist, und zwar infolge der Tatsache, daß sich das erste Glied (30) in der zweiten Position befindet und daß sich das zweite Glied (40) in der geschlossenen Position befindet, wobei die Längsachsen (48, 56) der zweiten und dritten Glieder (40, 50) eine im wesentlichen gerade Linie bei der offenen Position des dritten Glieds (50) bilden, in der es zum Rahmen (18) hin versetzt ist.

**Revendications**

1. Dispositif d'accumulation d'arbes (20) pour une ramasseuse d'arbres multiple (12), pour accumuler des arbres (26) à raison d'un à la fois, le dispositif (20) comprenant un châssis (18); un second organe allongé (40) connecté pivotant au châssis (18), un troisième organe allongé (50) ayant une première partie extrême (52) connectée pivotante à une partie extrême (44) du second organe (40); et un moyen de sollicitation (66) pour solliciter le troisième organe (50) vers une position ouverte, caractérisé en ce que le dispositif comprend en outre un premier organe allongé (30) ayant une première partie extrême (32) connectée pivotante au châssis (18), une partie intermédiaire (46) du second organe (40) étant connectée pivotante à une seconde partie extrême (34) du premier organe (30), de sorte que le second organe (40) est connecté pivotant au châssis (18), le second organe (40) étant mobile par rapport au premier organe (30) entre un position ouverte et une position fermée; un moven (70) pour maintenir le second organe (40) àsl'une de ses positions ouverte et fermée; et un moyen (60) pour déplacer à pivotement le second organe (40) autour de la seconde partie extrême (34) du premier organe (30).

2. Dispositif (20) selon la revendication 1, caractérisé en ce que le moyen de maintien (70) comprend un ressort à boudin (70) connecté à une extrémité au premier organe (30) et connecté à l'autre extrémité au second organe (40).

3. Dispositif (20) selon la revendication 1 ou la revendication 2, caractérisé en ce que le moyen de déplacement (60) comprend un cylindre à fluide (60) connecté pivotant au châssis (18) et ou second organe (40).

4. Dispositif (20) selon l'une quelconque des revendications précédentes, caractérisé en ce que des moyens (62) sont prévus pour limiter le mouvement pivotant du premier organe (30).

5. Dispositif (20) selon la revendication 4, caractérisé en ce que les moyens de limitation (62) comprennent une broche (64) connectée au châssis (18) ou au premier organe (30); et un crochet (62) connecté à l'autre du châssis (18) et du premier organe (30).

6. Dispositif (20) selon la revendication 4 ou la revendication 5, caractérisé en ce que les moyens de limitation (62) limitent le mouvement pivotant du premier organe (30) par rapport au châssis (18) à une valeur comprise entre sensiblement 0 et 25 degrés.

7. Ramasseuse d'arbres multiple (12) ayant un dispositif (20) selon l'une quelconque des revendications précédentes dans laquelle le châssis (18) est sensiblement vertical, le premier organe (30) est mobile entre une première position dans laquelle le premier organe (30) est déplacé depuis le châssis (18) et une seconde position dans laquelle le premier organe (30) est déplacé vers le châssis (18), le second organe (40) est mobile entre sa position fermée dans laquelle la partie extrême (44) du second organe (4) connectée au troisième organe (50) est déplacé vers le premier organe (30) et sa position ouverte dans laquelle la partie extrême (44) du second organe (40) est déplacée depuis le premier organe (30), et le troisième organe (50) est déplacé, en utilisation, vers le châssis (18) en réponse au premier organe (30) qui est dans sa seconde position et au second organe (40) qui est dans sa position fermée, les axes longitudinaux (48, 56) des second et troisième organes (40, 50) formant une ligne sensiblement droite dans la position ouverte du troisième organe (50) dans laquelle il est déplacé vers le châssis (18).

# FIG.I.

# FIG.3.

FIG.2.

0 025 032

2

Fig.4.

Fig.5.

Fig.6.

Fig.7.

3